# EUROPEAN PATENT SPECIFICATION

(11) **EP 2 781 871 B1**
(45) Date of publication and mention of the grant of the patent: **12.06.2019**
(21) Application number: 14160770.5
(22) Date of filing: 19.03.2014
(51) Int. Cl.: F28D 20/00, F28D 21/00

(54) **Box, chemical heat storage reactor, and chemical heat storage system**
Kasten, chemischer Wärmespeicherreaktor und chemische Wärmespeicheranlage
Boîte, réacteur de stockage de chaleur chimique et système de stockage de chaleur chimique

(30) Priority: 21.03.2013 JP 2013058421
(43) Date of publication of application: 24.09.2014
(73) Proprietor: Kabushiki Kaisha Toyota Chuo Kenkyusho, Nagakute-shi, Aichi 480-1192 (JP); Omi Mining Co. Ltd, Shiga 521-0242 (JP)
(72) Inventor: Mochizuki, Miyo, Nagakute-shi, Aichi 480-1192 (JP); Shimazu, Takashi, Nagakute-shi, Aichi 480-1192 (JP); Itahara, Hiroyuki, Maibara-shi, Shiga 521-0242 (JP); Fujimura, Takatsune, Maibara-shi, Shiga 521-0242 (JP)
(74) Representative: Kramer Barske Schmidtchen Patentanwälte PartG mbB

(56) References cited:
- WO-A1-2012/128379
- WO-A1-2012/133258
- US-A- 4 581 049

## Description

### Background of the Invention

### Technical Field

The present invention relates to a box that is used in a chemical heat storage reactor and that allows passage of water vapor, a chemical heat storage reactor, and a chemical heat storage system that stores heat by a chemical reaction.

### Related Art

Japanese Patent Application Laid-Open (JP-A) No. 2012-211713 describes a chemical heat storage reactor including heating medium flow paths in which a heating medium flows, a reaction vessel that forms a water vapor flow path interposed between the heating medium flow paths, a main tube section and branch tube sections provided centrally inside the reaction vessel, and a heat storage material provided to both outsides of the branch tubes inside the reaction vessel. In the chemical heat storage reactor of the above document, the main tube section suppresses expansion of the heat storage material and the branch tube sections allow passage of water vapor during expansion of the heat storage material due to a hydration reaction, thereby securing flow paths for the water vapor.

WO 2012/128379 A1 discloses a box according to the preamble of claim 1 and a chemical heat accumulator comprising a chemical heat storage material structure that includes a granular chemical heat storage material and has a polyhedral structure, and a structure restriction member that accommodates the chemical heat storage material structure and restricts each face of the accommodated chemical heat storage material structure at least at a portion of the face.

### Summary

In the chemical heat storage reactor of the above document, the heat storage material has a large hydration expansion pressure, in the region of several MPa, such that there is a possibility of peripheral edges of the branch tube sections flexing with expansion of the heat storage material due to hydration. In such cases, there is a possibility that a portion of the heat storage material that has turned to powder due to expansion gets in the water vapor flow paths through gaps between the peripheral edges of the branch tube sections and the reaction vessel.

In consideration of the above circumstances, a subject of the present invention is to obtain a box used in a chemical heat storage reactor, a chemical heat storage reactor and a chemical heat storage system capable of suppressing the getting of powder inside a water vapor flow path.

A box according to a first aspect of the present invention is configured to be used in a chemical heat storage reactor, and the box includes: a first wall portion disposed between a water vapor flow path and an aggregate body of a powder; plural filtration holes formed in the first wall portion that allow passage of water vapor from the flow path to the aggregate body while restricting the powder from penetrating into the flow path; and plural second wall portions disposed along a peripheral edge of the first wall portion and surrounding the aggregate body, wherein the first wall portion and the second wall portions are configured by folding a sheet material, such that at least one of either a corner portion between two of the second wall portions or a corner portion between the first wall portion and one of the second wall portions is formed, wherein a mating portion is provided by overlapping the sheet material, wherein the box further includes a retaining portion that is formed integrally with the second wall portions so as to project out from the second wall portions, and that is folded and retains the mating portion.

According to the first aspect, when a portion of the aggregate body turns to powder due for example to expansion of the aggregate body, the second wall portions suppress the powder from getting into the flow path over the peripheral edge of the first wall portion of the box. Powder can accordingly be suppressed from penetrating inside the water vapor flow path in comparison to configurations not provided with the second wall portions.

Moreover, in the configuration of the first aspect, at least one of the corner portion between two of the second wall portions or the corner portion between the first wall portion and one of the second wall portions is formed by folding the sheet material, thereby enabling the corner portion of the box to be shaped without rounded corner portion.

In addition, gaps can be suppressed from forming at the mating portion even when the aggregate body expands and presses the mating portion to be separated. Powder is accordingly suppressed from slipping past the mating portion.

In a box according to a second aspect of the present invention, the first wall portion and the second wall portions are configured by folding a single sheet material, such that the corner portion between two of the second wall portions and the corner portion between the first wall portion and one of the second wall portions are formed.

According to the second aspect, the mating portion where there is a possibility of powder slipping past are reduced in comparison to configurations (Comparative Examples) in which the box is formed from plural sheet material.

According to the first aspect, the mating portion of the sheet material can be suppressed from coming apart and misalignment. Handling of the box can accordingly be made easier.

A box according to a third aspect of the present invention, the mating portion is provided at least at the second wall portions. According to the third aspect, the powder is suppressed from slipping past the mating portion.

A chemical heat storage reactor according to a fourth aspect of the present invention includes: a vessel provided with a water vapor flow path; the box of any one of the first aspect to the third aspect provided inside the vessel; and a heat storage material that is housed within the box inside the vessel as the aggregate body of the powder, which generates heat by a hydration reaction with water vapor and stores heat by a dehydration reaction with heating.

According to the fourth aspect, water vapor flows in the flow path and passes through the filtration holes to reach the heat storage material. The heat storage material generates heat through a hydration reaction between the heat storage material and the water vapor, and the heat storage material stores heat through a dehydration reaction due to heating.

Note that since the heat storage material is surrounded by the second wall portions disposed along the peripheral edges of the first wall portion, the powder is suppressed from getting inside the flow path by the second wall portions even when a portion of the heat storage material disintegrates to turn to the powder with expansion in the hydration reaction. Since the water vapor flow path is suppressed from becoming blocked by the heat storage material, a decrease in the amount of water vapor supplied to the heat storage material can be suppressed.

In a chemical heat storage reactor according to a fifth aspect of the present invention has the box according to the first aspect, wherein an overlapping portion of the mating portion of the sheet material presses against the vessel inner wall due to an expansion pressure generated by a hydration reaction of the heat storage material.

According to the fifth aspect, the overlapping portion of the mating portion of the sheet material is pressed against the inner wall of the vessel due to expansion pressure generated by the hydration reaction of the heat storage material, thereby suppressing the overlapping portion of the sheet material from coming apart. Powder of the heat storage material can accordingly be suppressed from slipping past the overlapping portion of the sheet material.

A chemical heat storage reactor according to a sixth aspect of the present invention further includes a heat storage material retaining portion that is formed integrally with the second wall portions so as to project out from the second wall portions of the box, and that is folded and retains the heat storage material.

According to the sixth aspect, the heat storage material is integrated to the box, enabling handling of the heat storage material and the box to be made easier for example when the heat storage material and the box are being housed in the vessel.

A chemical heat storage reactor according to a seventh aspect of the present invention further includes: a flow path forming member that is provided inside the vessel at the opposite side of the first wall portion to the heat storage material, and that forms the flow path; and a flow path forming member retaining portion that is formed integrally with the box so as to project out from the box and that is folded and retains the flow path forming member.

According to the seventh aspect, the flow path forming member is integrated with the box, enabling handling of the flow path forming member and the box to be made easier for example when the flow path forming member and the box are being housed in the vessel.

A chemical heat storage system according to an eighth aspect of the present invention includes: the chemical heat storage reactor from any one of the fourth aspect to the seventh aspect; and an evaporation section that is in an airtight communication state with the vessel and that evaporates water for supply of the evaporated water to the vessel.

According to the eighth aspect, a decrease in the amount of water vapor supplied to the heat storage material can be prevented, thereby suppressing a decrease in the reactivity of the heat storage material in the chemical heat storage reactor. A reduction in the heating efficiency of the heating medium in the chemical heat storage system can accordingly be suppressed.

### Advantageous Effects of Invention

Due to the configuration described above, the present invention enables powder to be suppressed from penetrating inside a water vapor flow path.

### Brief Description of the Drawings

Embodiments of the present invention will be described in detail based on the following figures, wherein:
Fig. 1 is an overall view illustrating a schematic configuration of a chemical heat storage system according to a present exemplary embodiment;
Fig. 2A is a cross-section illustrating an internal configuration of a reaction vessel according to the present exemplary embodiment, and Fig. 2B is a cross-section taken along line A-A of Fig. 2A;
Fig. 3 is a perspective view illustrating a flow path forming member according to the present exemplary embodiment;
Fig. 4 is a plan view illustrating a configuration of a sheet material that forms a box according to the present exemplary embodiment;
Fig. 5 is a perspective view illustrating a forming process to form a box from the sheet material illustrated in Fig. 4;
Fig. 6 is a perspective view illustrating a configuration of a box and a flow path forming member according to the present exemplary embodiment;
Fig. 7 is a perspective view illustrating a configuration of a box, a heat storage material and a flow path forming member according to the present exemplary embodiment;
Fig. 8 is a cross-section of a portion of the box, taken along line 8A-8A in Fig. 6;
Fig. 9 is a cross-section taken along line 9A-9A in Fig. 2B;
Fig. 10A is an explanatory drawing illustrating a heated state of a heating medium by a hydration reaction in the chemical heat storage system according to the present exemplary embodiment, and Fig. 10B is an explanatory drawing illustrating a condensation state during a dehydration reaction due to heating by the heating medium in the chemical heat storage system according to the present exemplary embodiment;
Fig. 11 is a graph illustrating a relationship between temperature and equilibrium pressure using reaction equilibrium lines of heat storage material and gas-liquid equilibrium lines of water in the chemical heat storage system according to the present exemplary embodiment;
Fig. 12A is a cross-section illustrating a corner portion of a box according to the present exemplary embodiment, and Fig. 12B is a cross-section illustrating a corner portion of a box according to a Comparative Example;
Fig. 13 is a plan view illustrating a configuration of a sheet material according to a modified example;
Fig. 14 is a perspective view illustrating a configuration of a box formed with the sheet material illustrated in Fig. 13;
Fig. 15 is a cross-section taken along line 15A-15A of Fig. 14;
Fig. 16 is a perspective view illustrating a configuration of a box according to a modified example;
Fig. 17 is a perspective view illustrating a configuration of a box according to another modified example;
Fig. 18 is a plan view illustrating a configuration of a sheet material for forming the box illustrated in Fig. 17; and
Fig. 19 is a cross-section taken along line 19A-19A of Fig. 17.

### Detailed Description of the Invention

An example of an exemplary embodiment of the present invention is described below based on the drawings.

### Chemical Heat Storage System 10

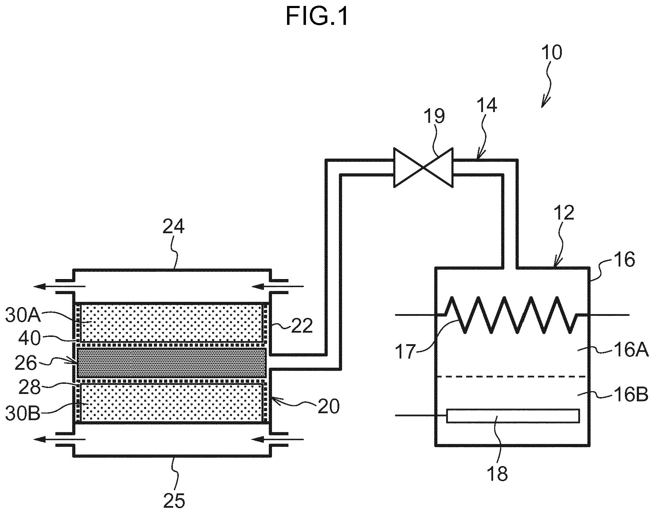

Firstly, a chemical heat storage system 10 of the present exemplary embodiment will be described. Fig. 1 is an overall view illustrating a schematic configuration of the chemical heat storage system 10.

As illustrated in Fig. 1, the chemical heat storage system 10 is configured including: an evaporator/condenser 12 that serves as an example of an evaporation section where evaporation and condensation of water (H₂O) are performed; a reactor 20 that serves as an example of a chemical heat storage reactor where a hydration reaction or a dehydration reaction is performed on heat storage materials 30A, 30B, described later; and a water vapor flow path 14 that is connected to the evaporator/condenser 12 and to the chemical heat storage reactor 20 (referred to as the reactor 20 hereafter) such that the inside of the evaporator/condenser 12 is in communication with the inside of the reactor 20. Note that in the present exemplary embodiment the chemical heat storage system 10 is applied to an automobile (not illustrated in the drawings) as an example.

The evaporator/condenser 12 is provided with the respective functions of: the evaporation section where stored water is evaporated (where water vapor is generated) and supplied to the reactor 20; a condensation section that condenses water vapor that enters from the reactor 20; and a storage portion that stores water condensed from the water vapor. A vessel 16 inside which water is stored is provided inside the evaporator/condenser 12, and a coolant flow path 17 that condenses water vapor, and a heater 18 for evaporation, are provided inside the vessel 16. The coolant flow path 17 is provided such that heat exchange occurs inside the vessel 16 at least at a portion that includes a gas phase portion 16A. The heater 18 is provided such that heating by electrical current occurs inside the vessel 16 at least at a portion that includes a liquid phase portion (the storage portion) 16B.

The water vapor flow path 14 is provided with an opening and closing valve 19 that switches communication and non-communication between the evaporator/condenser 12 (the vessel 16) and the reactor 20 (reaction vessel 22, described later). Connection locations between the vessel 16, the reaction vessel 22, the water vapor flow path 14 and the opening and closing valve 19 are configured air tight, and gas is removed in advance to form a vacuum in the internal space thereof.

### Reactor 20

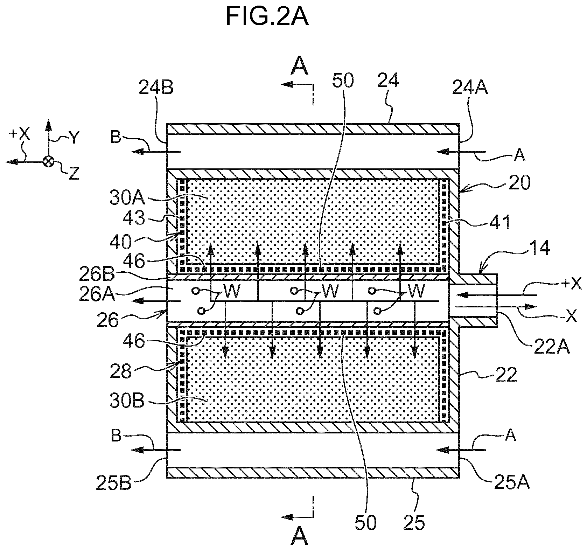

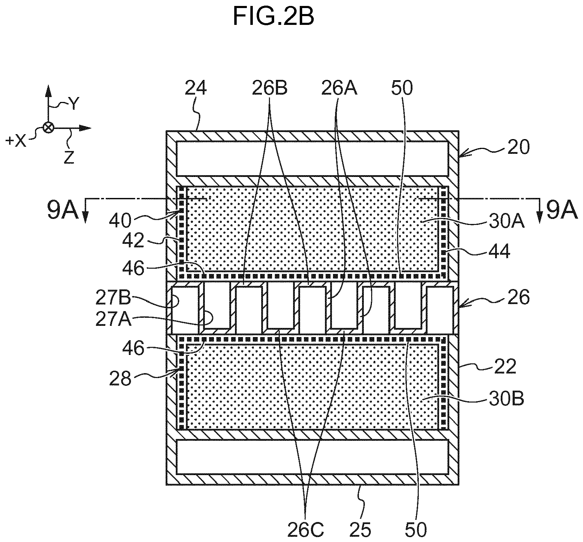

Next, the reactor 20 will be described. Fig. 2A and Fig. 2B are cross-section views illustrating an interior configuration of the reactor 20.

As illustrated in Fig. 2A and Fig. 2B, the reactor 20 is adjacent to heating medium flow paths 24, 25 that serve as medium flow paths inside which heat media (referred to as a heating medium hereafter) flow, and is provided with the reaction vessel 22 (an example of a vessel) in which water vapor from the water vapor flow path 14 flows. The reactor 20 is further provided with: the heat storage materials 30A, 30B (examples of an aggregate body of a powder) that are respectively provided to the heating medium flow path 24 side and the heating medium flow path 25 side inside the reaction vessel 22; boxes 40, 28 having filter portions 46 (examples of a first wall portion) respectively provided at the opposite sides of the heat storage materials 30A, 30B to the heating medium flow path 24, 25 sides inside the reaction vessel 22; a flow path forming member 26 provided inside the reaction vessel 22 at the opposite sides of the filters 46 to the sides of the heat storage materials 30A, 30B.

Note that in the description below, in the reaction vessel 22: the arrow Y direction is the direction in which the flow path forming member 26, the filter portion 46, and the heat storage materials 30A, 30B are stacked; the arrow X direction is a direction orthogonal to the arrow Y direction and is the direction of water vapor flow; and the arrow Z direction is a direction orthogonal to the arrow X direction and the arrow Y direction. Moreover, when distinguishing between the inflow direction and outflow direction of water vapor to the reaction vessel 22 inside, the arrow +X direction is the inflow direction, and the arrow -X direction is the outflow direction.

The arrow Y direction is the up-down direction of Figs. 2A and 2B, and the heat storage material 30B, the filter portion 46, the flow path forming member 26, the filter portion 46, and the heat storage material 30A are stacked in sequence from the lower side toward the upper side inside the reaction vessel 22. The heating medium flow path 25 is disposed adjacent to the lower side of the reaction vessel 22, and the heating medium flow path 24 is disposed adjacent to the upper side of the reaction vessel 22. Note that in the present exemplary embodiment, as an example, the reactor 20 is disposed such that the X-Y face is a vertical face, however there is no limitation thereto, and the reactor 20 may be disposed such that the X-Y face is a horizontal face.

The heating medium flow paths 24, 25, as an example, are configured by stainless steel rectangular tubes, and are provided with flat rectangular flow inlets 24A, 25A through which the heating medium flows in, and flat rectangular flow outlets 24B, 25B through which the heating medium flows out. Note that the inflow of the heating medium from the flow inlets 24A, 25A to the inside of the heating medium flow paths 24, 25 is indicated by the arrow A, and the outflow of the heating medium from inside the heating medium flow paths 24, 25 to the flow outlets 24B, 25B is indicated by the arrow B. Arrows A and B both run in the arrow X direction.

The heating medium conveys heat obtained from heat storage materials 30A, 30B to a heating target. In the present exemplary embodiment, the engine oil of a vehicle (not illustrated in the drawings) is used as an example of a heating medium. Note that a fluid such as water may be used as another example of a heating medium. Moreover, a catalyst that is not a fluid may be used as a heating medium, and the catalyst may be heated.

The reaction vessel 22 is a cuboidal vessel, and an opening portion 22A is formed at an arrow Y direction central portion of a side wall located at one end in the arrow X direction. One end of the water vapor flow path 14 is connected to the opening portion 22A. Moreover, the flow path forming member 26 is disposed inside the reaction vessel 22 at a location facing the opening portion 22A.

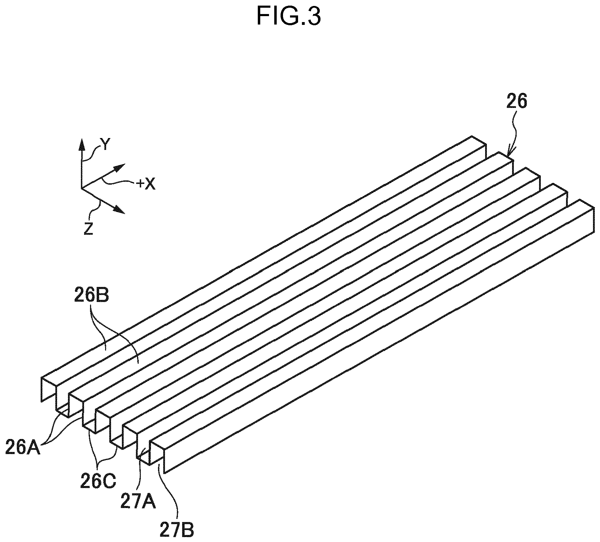

As illustrated in Fig. 2B and Fig. 3, as an example, the flow path forming member 26 is configured as a corrugated sheet (a wall portion) made from stainless steel such that the cross-section profile along the arrow Z direction (the Y-Z face) is configured with a rectangular waveform shape of repeating undulations by press processing. Specifically, the flow path forming member 26 is formed by: plural side walls 26A disposed upright with separations therebetween in the arrow Z direction; upper walls 26B connecting together upper end portions of two of the side walls 26A along the arrow Z direction; and lower walls 26C that are staggered with respect to the upper walls 26B and connect together lower end portions of two of the side walls 26A along the arrow Z direction.

The side walls 26A are formed in rectangular shapes with a long side in the arrow X direction and a short side in the arrow Y direction. The upper walls 26B and the lower walls 26C are formed in rectangular shapes with a long side in the arrow X direction and the short side in the arrow Z direction. The flow path forming member 26 forms upper side flow paths 27A (examples of a water vapor flow path) that are enclosed in a square bracket shape by two of the side walls 26A and one of the lower walls 26C, and lower side flow paths 27B (examples of a water vapor flow path) that are enclosed in a square bracket shape by two of the side walls 26A and one of the upper walls 26B. The flow path forming member 26 is configured such that the water vapor flows into the plural upper side flow paths 27A and the plural lower side flow paths 27B.

The heat storage materials 30A, 30B, employ for example a compact of calcium oxide (CaO) that is an alkali earth metal oxide. The compact is for example formed in a substantially rectangular block shape by blending calcium oxide powder with a binder (for example, clay mineral) and baking.

The heat storage materials 30A, 30B release heat (generate heat) accompanying hydration, and store heat (absorb heat) accompanying dehydration. In the reactor 20, configuration is made such that heat can be reversibly released and stored repeatedly by the chemical reaction below.

CaO + H₂O ↔ Ca(OH)₂

When an amount of heat Q stored and generated is included in the equation, it becomes:

CaO + H₂O → Ca(OH)₂ + Q

Ca(OH)₂ + Q → CaO + H₂O

Note that, as an example, the heat storage capacity of the heat storage materials 30A, 30B per kilogram is 1.86 MJ/kg.

### Box 40

Next, a specific configuration of the box 40 will be described. Note that the box 28 is configured similarly to the box 40 and description thereof will therefore be omitted as appropriate.

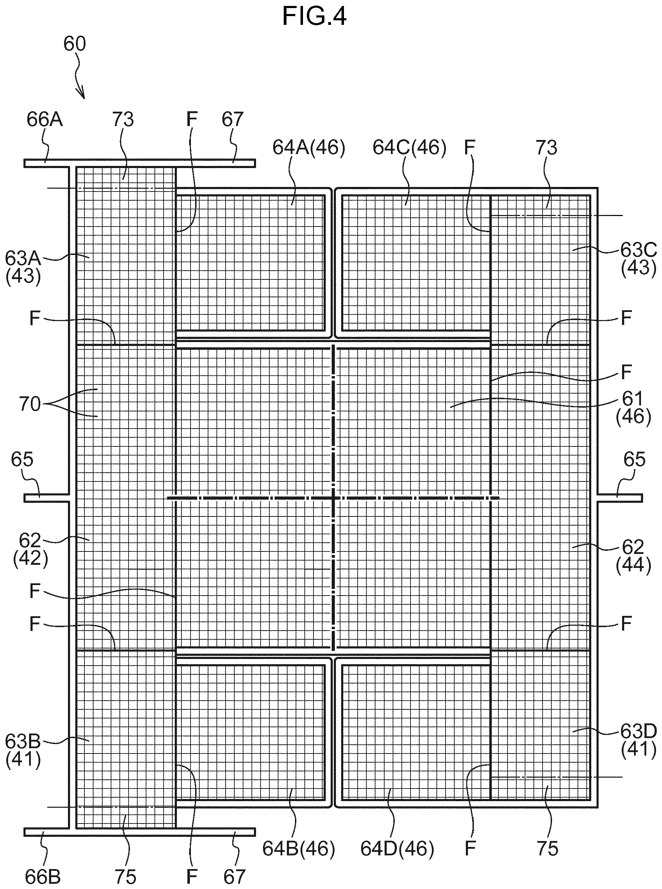

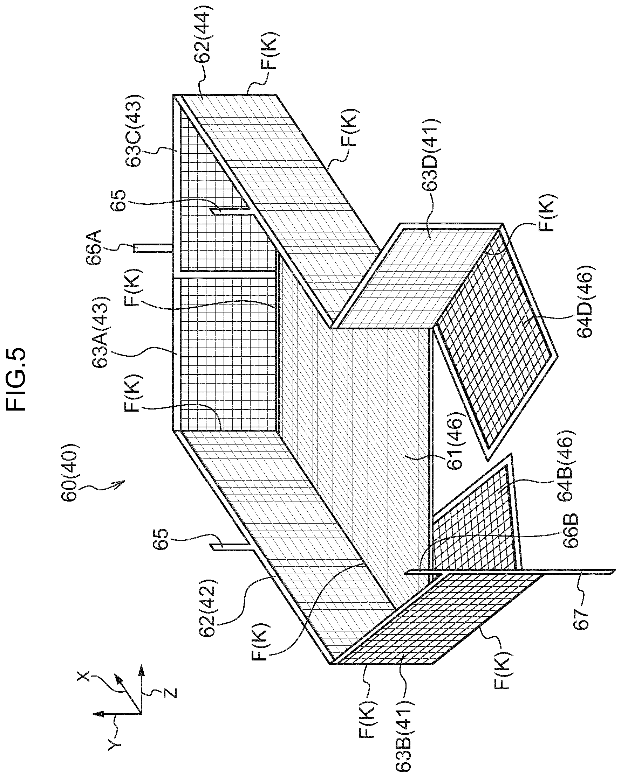

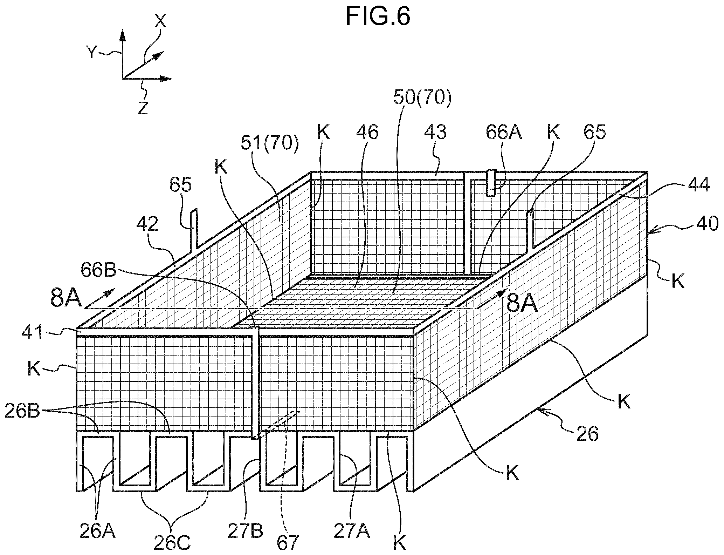

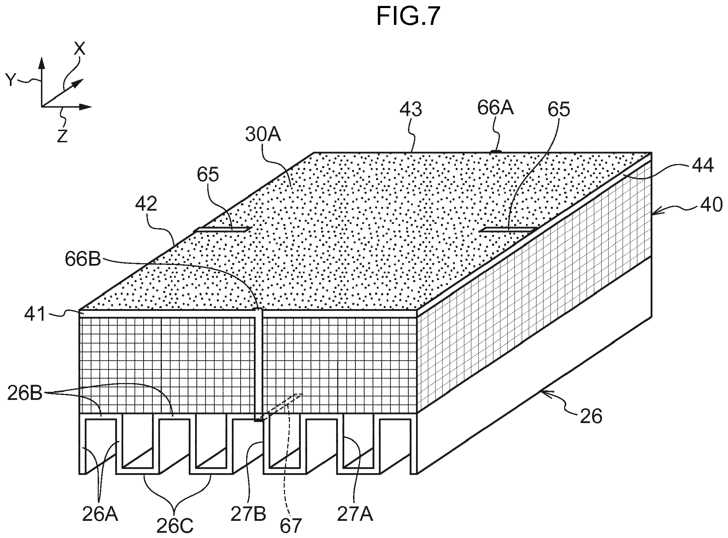

The box 40 is configured by a single sheet material 60 (see Fig. 4) that is provided with plural holes 70 and that is folded into a box shape structure (see Fig. 5). Specifically, as illustrated in Fig. 6 and Fig. 7, the box 40 includes: the filter portion 46 described above; and side walls 41, 42, 43, 44 (examples of a second wall) that are disposed along the peripheral edges of the filter portion 46 and that surround the heat storage material 30A (see Fig. 7).

Specifically, the heat storage material 30A is interposed between the side walls 41, 43 in the X direction, and is interposed between the side walls 42, 44 in the Z direction.
Namely, the side walls 41, 42, 43, 44 are disposed about an axis running along the Y direction, and configure peripheral walls that enclose the heat storage material 30A from 4 directions.

Of the plural holes 70, the holes formed at the filter portion 46 are configured to function as plural filtration holes 50 that allow the water vapor to pass from the flow path forming member 26 side to the heat storage material 30A side. Namely, the filtration holes 50 are formed in the Y direction, with water vapor allowed to pass through in the Y direction.

The filtration holes 50 configure flow paths that are narrower than the average particle size of the heat storage material 30A. Water vapor passes through the filtration holes 50, however CaO powder larger than the average particle size is restricted from penetrating to the flow path forming member 26 side (the upper side flow paths 27A side).

In the present exemplary embodiment, the average particle size of the heat storage material 30A is defined such that when the CaO particles forming the heat storage materials 30A, 30B are powder, the average particle size of the CaO powder is taken as the average particle size, when the CaO particles are in granular form, the average particle size of the powder prior to granulation is taken as the average particle size, and when the CaO particles are in the form of a compact, the average particle size of the powder for granulation prior to compacting is taken as the average particle size. This is based on the assumption that, were the granules or the compact to disintegrate, they would return to their state in the earlier process.

Of the plural holes 70, holes 51 formed in the side walls 41, 42, 43, 44 are not for the purpose of allowing water vapor to pass through, but form unevenness on the side walls 41, 42, 43, 44. This unevenness functions to increase the retentive properties of the side walls 41, 42, 43, 44 (gripping properties) for retaining the heat storage material 30A.

The filter portion 46 of the box 40 is disposed in contact with the plural upper walls 26B of the flow path forming member 26. The filter portion 46 of the box 40 thereby serves to disperse force from the flow path forming member 26, without localized concentration, and convert this force into face contact pressure. Note that in the box 28, the filter portion 46 is disposed in contact with the plural lower walls 26C of the flow path forming member 26.

The sheet material 60 that forms the box 40 is for example configured by a single layer of metal foil. A stainless foil may for example be employed as the metal foil. Moreover, the external shape and the plural holes 70 of the sheet material 60 are formed by, for example, processing by etching, electroforming, electron beam, or by other mechanical processing.

As illustrated in Fig. 4, the sheet material 60 is formed in a substantially rectangular shape. Specifically, the sheet material 60 includes a square shaped first configuration portion 61 that is disposed at a central portion of the sheet material 60 and that forms the filter portion 46. Rectangular shaped second configuration portions 62 that form the side walls 42, 44 are provided at both left-right direction sides of the first configuration portion 61 as illustrated in Fig. 4.

Each of the second configuration portions 62 is formed integrally with a heat storage material retaining claw 65 (an example of a heat storage material retaining portion) that projects out toward the opposite side of the second configuration portion 62 to the first configuration portion 61 side. Namely, each of the heat storage material retaining claws 65 is formed at a position projecting out from the side walls 42, 44 toward the upper side when the box 40 is constructed (see Fig. 5). Each of the heat storage material retaining claws 65 is configured so as to be folded toward the box 40 inside (the heat storage material 30A side) and press against the upper surface of the heat storage material 30A, and thereby retain the heat storage material 30Ahoused in the box 40 (see Fig. 7).

Rectangular shaped third configuration portions 63A, 63B, 63C, 63D that form the side walls 41, 43 are provided to both top and bottom direction sides of the two second configuration portions 62 as illustrated in Fig. 4.

Fourth configuration portions 64A, 64C that overlap with the first configuration portion 61 when the box 40 is constructed are formed at the third configuration portion 63C side (at a right side of the page) of the third configuration portion 63A, and the third configuration portion 63A side (at a left side of the page) of the third configuration portion 63C. Moreover, fourth configuration portions 64B, 64D that overlap with the first configuration portion 61 are provided at the third configuration portion 63D side (at a right side of the page) of the third configuration portion 63B and the third configuration portion 63B side (at a left side of the page) of the third configuration portion 63D (see Fig. 5).

At an upper edge portion of the third configuration portion 63A in the drawings, a configuration portion retaining claw 66A (an example of a retaining portion) and a flow path forming member retaining claw 67 (an example of a flow path forming member retaining portion) are respectively formed projecting out in the left and right directions of the drawing. Moreover, at a lower edge portion of the third configuration portion 63B in the drawings, a configuration portion retaining claw 66B (an example of a retaining portion) and a flow path forming member retaining claw 67 are respectively formed projecting out in the left and right directions of the drawing. The configuration portion retaining claws 66A, 66B are thereby positioned at positions projecting out from the side walls 42, 44 toward the upper side when the box 40 is constructed (see Fig. 5). Moreover, each of the flow path forming member retaining claws 67 is positioned at a position projecting out from the side walls 41, 43 toward the flow path forming member 26 side (the lower side) when the box 40 is constructed (see Fig. 5).

The configuration portion retaining claw 66A is configured so as to be folded toward the box 40 inside when the box 40 is constructed, thus retaining the third configuration portion 63C that overlaps with the third configuration portion 63A against the third configuration portion 63A (see Fig. 6). The configuration portion retaining claw 66B is configured so as to be folded toward the box 40 inside when the box 40 is constructed, thus retaining the third configuration portion 63D that overlaps with third configuration portion 63B against the third configuration portion 63B.

Each of the flow path forming member retaining claws 67 is configured so as to be folded toward the lower side flow paths 27B of the flow path forming member 26 and press the upper walls 26B from the lower side, thus retaining the flow path forming member 26 against the box 40 (see Fig. 6).

The third configuration portion 63A and the third configuration portion 63C include overlapping portions 73 that overlap with each other when the box 40 is constructed. Note that in the example illustrated in Fig. 4, regions further toward the upper side than the single-dotted dashed lines in the third configuration portion 63A and the third configuration portion 63C form the overlapping portions 73.

The third configuration portion 63B and the third configuration portion 63D include overlapping portions 75 that overlap with each other when the box 40 is constructed. Note that in the example illustrated in Fig. 4, regions further toward the lower side than the single-dotted dashed lines in the third configuration portion 63B and the third configuration portion 63D form the overlapping portions 75.

The overlapping portions 73, 75 configure mating portions of the box 40. Note that the third configuration portions 63A and the third configuration portion 63B are provided so as to overlap to the outside of the third configuration portion 63C and the third configuration portion 63D respectively.

The sheet material 60 is constructed into the box 40 by valley folding of plural folds F that are provided to the sheet material 60 in advance. When this is being performed, the fourth configuration portions 64A, 64B, 64C, 64D are provided so as to overlap at the outside (the flow path forming member 26 side) of the first configuration portion 61. These overlapping portions configure mating portions of the box 40.

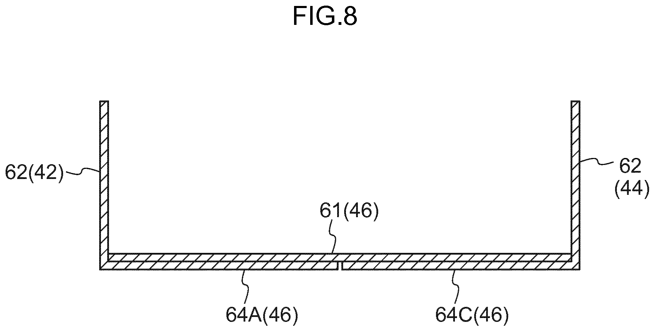

Moreover, fourth configuration portions 64A, 64B, 64C, 64D are respectively provided so as to overlap with each of four regions of the first configuration portion 61 divided by the single-dotted dashed lines in a cross shape (see Fig. 4). As illustrated in Fig. 8, a uniform thickness (height direction dimension) is accordingly obtained for the overall filter portion 46 that is configured by the fourth configuration portions 64A, 64B, 64C, 64D overlapping with the first configuration portion 61. Note that the outer edges (the outer sides) of the fourth configuration portions 64A, 64B, 64C, 64D are all in contact with each other, and it is desirable for there to be substantially no gaps between the fourth configuration portions 64A, 64B, 64C, 64D.

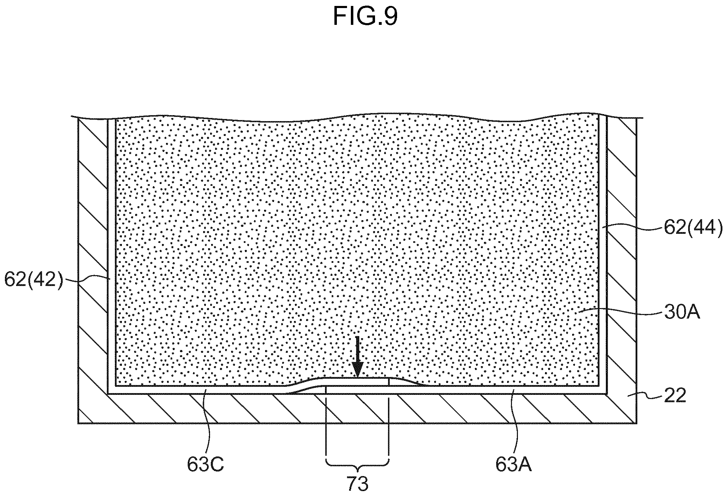

As illustrated in Fig. 9, the overlapping portions 73 of the third configuration portion 63A and the third configuration portion 63C are configured so as to press against the reaction vessel 22 inner wall due to expansion pressure generated by the hydration reaction of the heat storage material 30A. Note that similarly, the overlapping portions 75 of the third configuration portion 63B and the third configuration portion 63D are configured so as to press against the reaction vessel 22 inner wall due to expansion pressure generated by the hydration reaction of the heat storage material 30A.

The overlapping portions between the fourth configuration portions 64A, 64B, 64C, 64D and the first configuration portion 61 are configured so as to press against the upper walls 26B of the flow path forming member 26 due to expansion pressure generated by the hydration reaction of the heat storage material 30A.

Note that the box 28 is similarly configured such that the overlapping portions 73 and the overlapping portions 75 press against the inner wall of the reaction vessel 22 due to expansion pressure generated by the hydration reaction of the heat storage material 30B. Moreover, the box 28 is similarly configured such that the overlapping portions between the fourth configuration portions 64A, 64B, 64C, 64D and the first configuration portion 61 press against the lower walls 26C of the flow path forming member 26 due to the expansion pressure generated by the hydration reaction of the heat storage material 30B.

In the present exemplary embodiment, the mating portions are thereby configured by overlapping the sheet material 60. The mating portions are connected in a state in which, with respect to one portion of the sheet material 60, another overlapping portion of the sheet material 60 is able to move (for example, slide) to create a gap between the one portion and the other portion.

Moreover, the plural fold F portions form corner portions K between adjacent side walls out of the side walls 41, 42, 43, 44, and form corner portions K between the filter portion 46 and the side walls 41, 42, 43, 44.

The box 40 is thereby configured by the filter portion 46 and the side walls 41, 42, 43, 44 while forming the corner portions K between adjacent side walls out of the side walls 41, 42, 43, 44 and the corner portions K between the filter portion 46 and the side walls 41, 42, 43, 44 by folding the single sheet material 60.

Moreover, in the present exemplary embodiment, the box 40 is configured without performing joining of the sheet material 60. Namely, the box 40 does not include any portions that have been joined together.

### Operation of the present exemplary embodiment

Next, the operation of the present exemplary embodiment will be described.

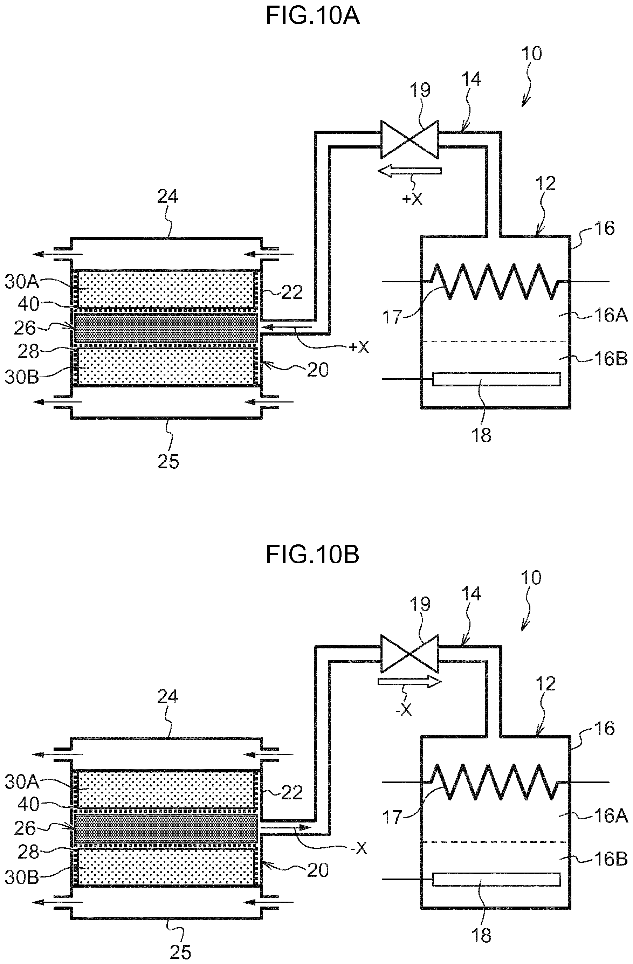

As illustrated in Fig. 10A, when the heat stored by the reactor 20 of the chemical heat storage system 10 is to be released, with the opening and closing valve 19 in an open state, the water of the liquid phase portion 16B is evaporated by the heater 18 of the evaporator/condenser 12. Consequently, the generated water vapor moves through inside the water vapor flow path 14 in the arrow +X direction, and is supplied to the reactor 20 inside.

Subsequently, inside the reactor 20, the supplied water vapor W flows through the inside of plural upper side flow paths 27A and lower side flow paths 27B of the flow path forming member 26 (see Fig. 2A). The water vapor W inside the upper side flow paths 27A is allowed to flow through the filter portion 46 of the box 40, and by contacting the heat storage material 30A causes the heat storage material 30A to undergo a hydration reaction and release heat. The heat is conveyed to the heating target by the heating medium flowing inside the heating medium flow path 24. Similarly, the water vapor W inside the lower side flow paths 27B is allowed to flow through the filter portion 46 of the box 28, and by contacting the heat storage material 30B causes the heat storage material 30B to undergo a hydration reaction and release heat. The heat is conveyed to the heating target by the heating medium flowing inside the heating medium flow path 25.

As illustrated in Fig. 10B, when heat is to be stored by the heat storage materials 30A, 30B of the reactor 20 of the chemical heat storage system 10, with the opening and closing valve 19 in an open state, the heated heating medium flows by means of the heat source (not illustrated in the drawings) inside the heating medium flow paths 24, 25. Due to being heated by the heating medium, the heat storage materials 30A, 30B undergo a dehydration reaction and the heat is stored by the heat storage materials 30A, 30B. The water vapor given off by the heat storage materials 30A, 30B then passes through the filter portions 46 of the boxes 40, 28 to the flow path forming member 26, further flows through the water vapor flow path 14, and is guided to the evaporator/condenser 12 inside. In the gas phase portion 16A of the evaporator/condenser 12, the water vapor is then cooled by the coolant flowing through the coolant flow path 17 and the condensed water is stored in the liquid phase portion 16B of the vessel 16.

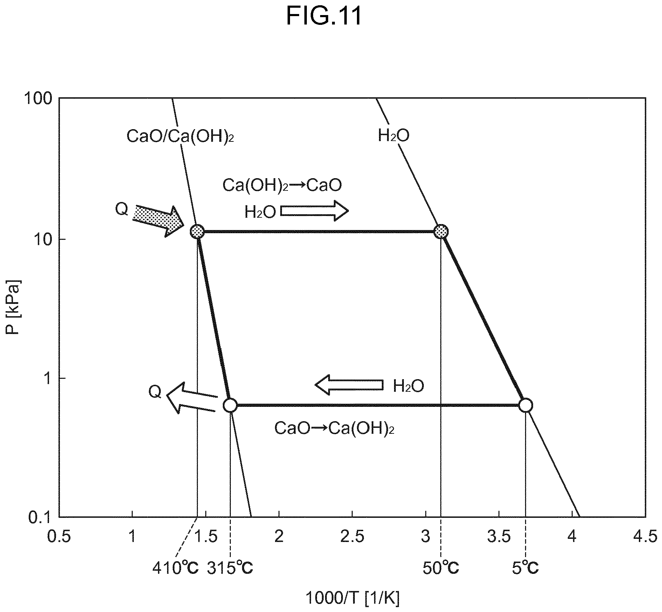

The above description of heat storage and heat release by the heat storage materials 30A, 30B is supplemented by referring to the cycle (an example thereof) of the chemical heat storage system 10 illustrated in Fig. 11. Fig. 11 is a PT graph illustrating a cycle of the chemical heat storage system 10 from the perspective of equilibrium pressure. In this graph the upper isobaric line illustrates the dehydration (endothermic) reaction, and the lower isobaric line illustrates the hydration (exothermic) reaction.

In this cycle, when heat is stored with the temperature of the heat storage materials 30A, 30B at 410°C for example, the water vapor reaches an equilibrium temperature of 50°C. In the chemical heat storage system 10, the water vapor is cooled to 50°C or lower by heat exchange with the coolant of the coolant flow path 17 of the evaporator/condenser 12 (see Fig. 1), and is condensed to water.

The water vapor is generated at the vapor pressure corresponding to the temperature of the heater 18, due to heating by the heater 18 (see Fig. 1). For example, in the cycle in Fig. 11, it can be seen that the heat storage material releases heat at 315°C when water vapor is generated at 5°C. Accordingly, in the chemical heat storage system 10 that has a vacuum degasified interior, heat can be drawn out, and a high temperature of 315°C can be obtained from a low temperature heat source in the region of 5°C.

In the reactor 20 of the present exemplary embodiment, since the filtration holes 50 of the filter portions 46 of the boxes 40, 28 are formed with flow paths narrower than the average particle size of the heat storage materials 30A, 30B, water vapor passes through the filter portions 46 but the heat storage materials 30A, 30B with particle sizes larger than the average particle size cannot pass through. If the heat storage materials 30A, 30B expand due to the hydration reaction and part of the heat storage materials 30A, 30B disintegrates, even if the disintegrated portion becomes particles that separate from heat storage materials 30A, 30B, the particles are thereby restricted from flowing through the filter portions 46 to the flow path forming member 26 side.

Moreover, in the reactor 20 due to the side walls 41, 42, 43, 44 enclosing the side faces of the heat storage materials 30A, 30B, powder of the heat storage materials 30A, 30B is suppressed from getting in the flow path forming member 26 side over outer peripheral portions of the filter portions 46.

The powder of the heat storage materials 30A, 30B is thereby suppressed from reaching the flow path forming member 26 side in the reactor 20. Accordingly, the flow path forming member 26 is not easily blocked by the heat storage materials 30A, 30B, and due to the efficient supply of water vapor to the heat storage materials 30A, 30B, a decrease in the reactivity of the heat storage materials 30A, 30B can be suppressed.

In the reactor 20, since the boxes 40, 28 are formed by the single sheet material 60 of metal foil instead of a metal fiber (a mesh construction), fiber warping and the like does not occur, and widening of the filtration holes 50 is suppressed even if the expansion pressure generated by the hydration reaction of the heat storage materials 30A, 30B is applied to the filter portion 46.

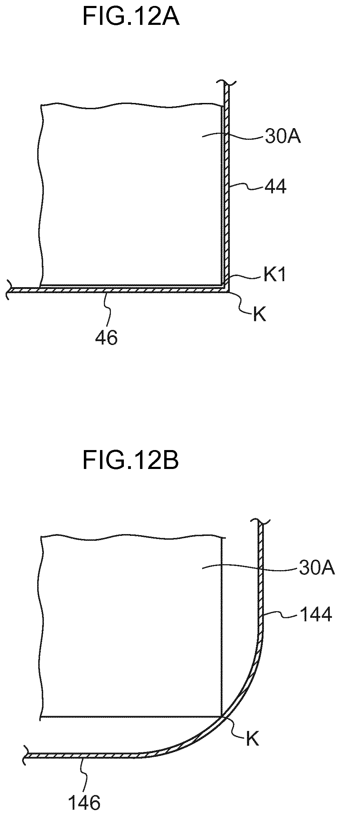

In the reactor 20, since the corner portions K between the neighboring side walls 41, 42, 43, 44, and the corner portions K between the filter portions 46 and the side walls 41, 42, 43, 44 are formed by folding the sheet materials 60, the boxes 40, 28 can be made without the corner portions K becoming rounded. Therefore, the interior capacity of the boxes 40, 28 becomes larger where the corner portions K do not become rounded. Moreover, because the corner portions K do not become rounded, the fitting between the corner portions K of the boxes 40, 28 with the corner portions K1 of the heat storage materials 30A, 30B is good, and gaps can be suppressed from formed between the filter portions 46 of the boxes 40, 28 and the heat storage materials 30A, 30B or between the heat storage materials 30A, 30B and the side walls 41, 42, 43, 44 (see Fig. 12A).

Namely, in cases of configurations of comparative example where the corner portions K are formed, without folding a sheet material, by deep drawing processing or the like, as illustrated in Fig. 12B, the fitting of the heat storage materials 30A, 30B to the corner portions K of the boxes 140, 128 is poor, and a space can easily be formed between the heat storage materials 30A, 30B, and the filter portions 146 of the boxes 140, 128, or between the heat storage materials 30A, 30B and the side wallsl41, 142, 143, 144.

Moreover, in the reactor 20, the corner portions K cannot easily become rounded because fold points F are provided in advance and the sheet material 60 is folded along these fold points F so as to construct the boxes 40, 28.

Since the overlapping mating portions of the sheet material 60 are formed in the reactor 20, even if the mating portions are pressed by the expansion pressure caused by the hydration reaction of the heat storage materials 30A, 30B, gaps is suppressed from formed at the overlapping portions. The powder of the heat storage materials 30A, 30B is accordingly suppressed from slipping past the mating portions. Namely, in cases of configurations where mating portions are formed by connecting outer edges of the sheet material 60 with lacking overlapping of the sheet material 60 (a comparative example), there is a possibility that gaps may form at the mating portions due to the expansion pressure by the hydration reaction of the heat storage materials 30A, 30B.

In the reactor 20, the overlapping portions 73 and the overlapping portions 75 of the box 40 (the mating portions) are pressed against the inner wall of the reaction vessel 22 by the expansion pressure by the hydration reaction of the heat storage material 30A as illustrated in Fig. 9. The overlapping portions 73 and the overlapping portions 75 (the mating portions) are therefore difficult to be apart, and separation is suppressed. The powder of the heat storage material 30A can accordingly be suppressed from slipping past the overlapping portions 73 and the overlapping portions 75 (the mating portions). Note that similar applies to the box 28.

In the reactor 20, the overlapping portions (the mating portions) between the fourth configuration portions 64A, 64B, 64C, 64D, and the first configuration portion 61 of the box 40, are pressed against the upper walls 26B of the flow path forming member 26 by expansion pressure by the hydration reaction of the heat storage material 30A. Therefore, these overlapping portions (these mating portions) are difficult to be apart, and separation is suppressed. Powder of the heat storage material 30A can accordingly be suppressed from slipping through these overlapping portions (the mating portions). Note that similar applies to the box 28.

In the reactor 20, the thickness (height direction dimension) of the entire filter portion 46, that is configured by the overlap between the fourth configuration portions 64A, 64B, 64C, 64D and the first configuration portion 61, is made uniform. The load applied to the surfaces of the heat storage materials 30A, 30B in the event of expansion due to the hydration reaction of the heat storage materials 30A, 30B is accordingly uniform. The disintegration of the heat storage materials 30A, 30B which may be happened due to a non-uniform load across the surfaces of the heat storage materials 30A, 30B is accordingly suppressed.

In the reactor 20, separation, sliding, and the like, of the mating portion of the sheet material 60 can be suppressed because the configuration portion retaining claw 66A of the sheet material 60 retains the third configuration portion 63C that overlaps with the third configuration portion 63A. The handling of the boxes 40, 28 are made easier for example when the boxes 40, 28 are being housed within the reaction vessel 22.

In the reactor 20, a process for joining the sheet material 60 is not necessary as the boxes 40, 28 do not have joined portions, and hence the number of processes in production can be decreased. Moreover, when the boxes 40, 28 have joined portions, there is a possibility that the joined portions may split due to deformation which may be caused by the expansion pressure by the hydration reaction of the heat storage materials 30A, 30B. In the present exemplary embodiment, the deformation is absorbed due the boxes 40, 28 not having joined portions.

In the reactor 20, the boxes 40, 28 are configured with the single sheet material 60, respectively, this enables a reduction in mating portions where there is a possibility of powder of the heat storage materials 30A, 30B slipping past, compared with configurations in which the boxes 40, 28 each is formed by plural sheet materials 60 (for comparative example). The mating portions of the sheet material 60 can be reduced and the number of retaining portions for the purpose of latching the sheet material 60 at the mating portions can accordingly be reduced. The cost of the sheet material 60 and the number of processes in the production can be decreased thereby.

In the reactor 20, the heat storage materials 30A, 30B are retained against the boxes 40, 28 by the heat storage material retaining claw 65. Accordingly, the heat storage materials 30A, 30B are integrated together with the boxes 40, 28, and handling of the heat storage materials 30A, 30B and the boxes 40, 28 is made easier for example when the heat storage materials 30A, 30B and the boxes 40, 28 are being housed in the reaction vessel 22. Moreover, the position of the heat storage materials 30A, 30B can be determined with respect to the boxes 40, 28 before the heat storage materials 30A, 30B and the boxes 40, 28 are housed in the reaction vessel 22.

In the reactor 20, the flow path forming member 26 is retained against the boxes 40, 28 by the flow path forming member retaining claw 67. Therefore, the flow path forming member 26 is integrated together with the boxes 40, 28, and handling of the flow path forming member 26 and the boxes 40, 28 is made easier for example when the flow path forming member 26 and the boxes 40, 28 are being housed in the reaction vessel 22. Moreover, the position of the flow path forming member 26 can be determined with respect to the boxes 40, 28 before the flow path forming member 26 and the boxes 40, 28 are housed in the reaction vessel 22. As a result, the flow path forming member 26 can effectively restrain the heat storage materials 30A, 30B, as the position of the flow path forming member 26 can be determined with respect to the boxes 40, 28.

In the reactor 20, indentations and protrusions are formed on the side walls 41, 42, 43, 44 by the plural holes 51 formed in the side walls 41, 42, 43, 44, and the retaining performance (grip performance) to retain the heat storage materials 30A, 30B is increased by the indentations and protrusions. The heat storage materials 30A, 30B can be restrained well thereby.

In the chemical heat storage system 10 of the present exemplary embodiment, since powder that has separated from the heat storage materials 30A, 30B is suppressed from getting into the reactor 20, a reduction in the heating efficiency of the heating medium in the chemical heat storage system 10 can accordingly be suppressed.

### Modified Examples of the Sheet Material 60 that Forms the Box 40

A sheet material 160, described below, may be used as the sheet material that forms the box 40 in place of the sheet material 60 described above. Note that the sheet material 160 described below may also be used to form the box 28.

Similarly to the sheet material 60 described above, the sheet material 160 is configured by a single layer of metal foil for example. Stainless foil, for example, is used as the metal foil. Moreover, the outer shape and the plural holes 70 of the sheet material 160 are formed by processes such as etching, electroforming, electron beam or other mechanical processes, for example.

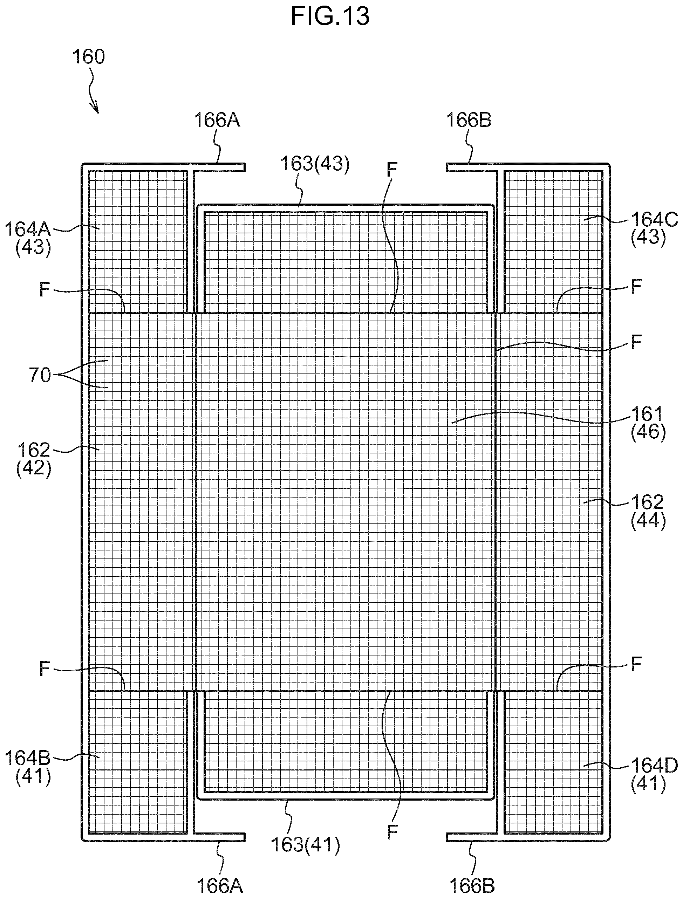

As illustrated in Fig. 13, the sheet material 160 is formed substantially rectangular. Specifically, the sheet material 160 has a square first configuration portion 161 that is disposed at a central portion of the sheet material 160 and becomes the filter portion 46. Rectangular shaped second configuration portions 162 that become the side walls 42, 44 are provided at both left-right direction sides of the first configuration portion 161 as illustrated in Fig. 13.

A pair of rectangular third configuration portions 163 that become the side walls 41, 43 are provided at both up-down direction sides of the first configuration portion 161 as illustrated in Fig. 13. Rectangular fourth configuration portions 164A, 164B, 164C, 164D that become side walls 41, 43 are respectively provided at both up-down direction sides of the two second configuration portions 162, as illustrated in Fig. 13.

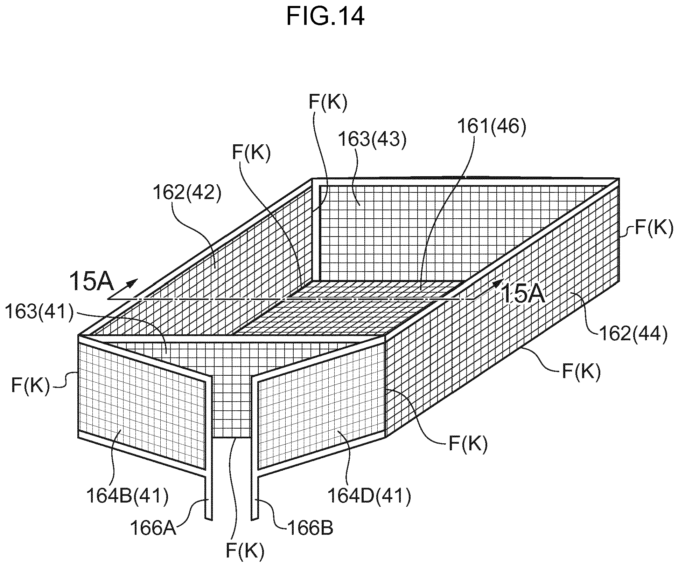

Configuration portion retaining claws 166A (an example of a retaining portion) that project out in the right direction of the drawing are respectively formed at an upper end portion of the fourth configuration portion 164A and a lower end portion of the fourth configuration portion 164B, as illustrated. Configuration portion retaining claws 166B (examples of retaining portions) that project out in the left direction of the drawing are respectively formed at an upper end portion of the fourth configuration portion 164C and a lower end portion of the fourth configuration portion 164D, as illustrated. The configuration portion retaining claws 166A, 166B are thereby provided at positions protruding toward the lower side from the side walls 41, 43 when the box 40 is constructed (see Fig. 14).

The configuration portion retaining claws 166A, 166B are folded toward the flow path forming member 26 side of the filter portion 46 when the box 40 is constructed, and each of the fourth configuration portions 164A, 164B, 164C, 164D that overlap with each of the third configuration portions 163 are retained against each of the third configuration portions 163.

Note that the configuration portion retaining claws 166A, 166B are folded at the lower side flow paths 27B of the flow path forming member 26, and press against the upper walls 26B from the lower side, and may therefore be used as the flow path forming member retaining claw 67 that retains the flow path forming member 26 against the box 40.

The sheet material 160 may be constructed as the box 40 by valley folding plural fold points F supplied to the sheet material 160 in advance. The fourth configuration portions 164A, 164B, 164C, 164D are overlapped with the outside of the third configuration portions 163 when this is performed. The overlapping portions configure the mating portions of the box 40.

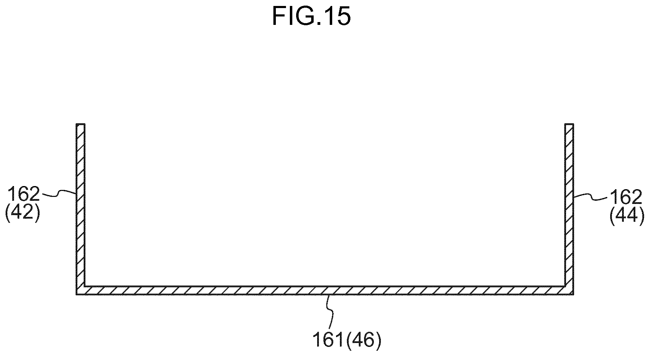

Note that, as illustrated in Fig. 15, at the first configuration portion 161 and the second configuration portions 162, the other configuration portions do not overlap, and the filter portion 46 and the side walls 42, 44 are configured by a single layered configuration portion.

Each of the third configuration portions 163 overlapping with the fourth configuration portions 164A, 164B, 164C, 164D are configured to press against the inner wall of the reaction vessel 22 due to expansion pressure caused by the hydration reaction of the heat storage material 30A.

In the present modified example, the mating portions are thereby configured by the sheet material 160 overlapping. The mating portions are overlapped in a state that enables one of the overlapping portion of the sheet material 60 to move (for example, slide) with respect to another overlapping portion and a space to be obtained between the one overlapping portion and the other overlapping portion.

Moreover, the plural fold F portions become the corner portions K between the neighboring side walls 41, 42, 43, 44 and the corner portions K between the filter portion 46 and the side walls 41, 42, 43, 44.

The box 40 is thereby configured by the filter portion 46 and the side walls 41, 42, 43, 44 while forming the corner portions K between the neighboring side walls 41, 42, 43, 44 and the corner portions K between the filter portion 46 and the side walls 41, 42, 43, 44 by folding of the one sheet of the sheet material 160.

Moreover, in the present exemplary embodiment, the box 40 is configured without performing joining of the sheet material 160. Namely, the box 40 does not have any joint portions. Note that the box 28 may be configured from the sheet material 160 in the same way.

According to the boxes 40, 28 formed from the sheet material 160 of the present modified example, the filter portion 46 is configured by a single layer of the first configuration portion 161 and the thickness (height direction dimension) of the entire filter portion 46 is thereby made uniform (constant). The load applied to the surfaces of the heat storage materials 30A, 30B, in the event that the heat storage materials 30A, 30B expand due to the hydration reaction, is thereby made uniform. The disintegration of the heat storage materials 30A, 30B which may be happened due to a non-uniform load across the surfaces of the heat storage materials 30A, 30B is accordingly suppressed.

### Modified Examples of the Boxes 40, 28

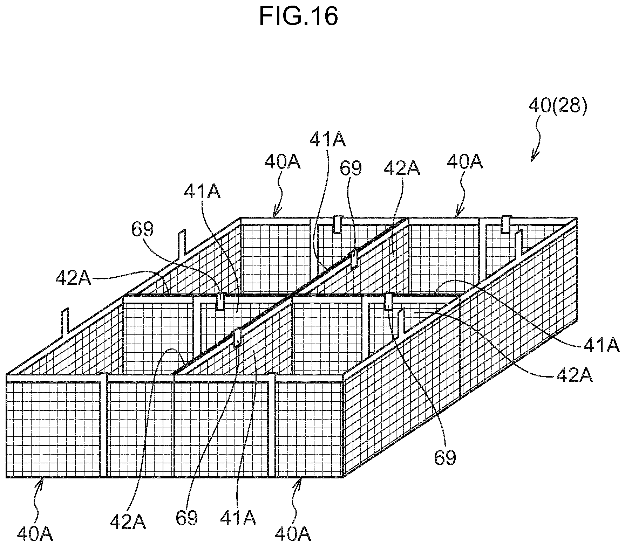

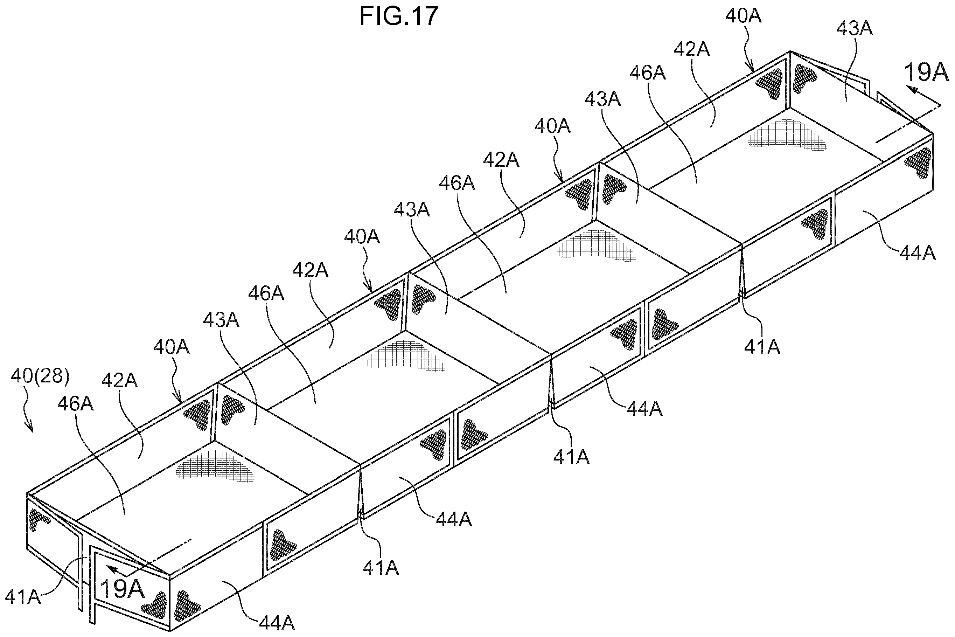

In the reactor 20 described above, the boxes 40, 28 are each configured as a single box. However, there is no limitation thereto, and the boxes 40, 28 may be configured as plural (for example, four) linked boxes 40A as illustrated in Fig. 16 and Fig. 17. Note that in cases of the boxes 40, 28 to be configured with plural boxes 40A, the heat storage materials 30A, 30B are prepared as plural heat storage materials, such that the plural heat storage materials are housed in each of the boxes 40A respectively.

In the configuration illustrated in Fig. 16, the four boxes 40A are respectively formed using the sheet materials 60, 160 in the same manner as the box 40. The four boxes 40A are disposed such that two adjacent side walls 41A, 42A of each of the boxes 40A are respectively connected to adjacent side walls 41A, 42A of some other of the boxes 40A.

At the side walls 41A, 42A, a retaining claw 69 that connects to a neighboring box 40A is formed as illustrated in Fig. 16. The retaining claw 69 is folded at the inside of the neighboring box 40A, thereby connecting together the boxes 40A.

In the configuration illustrated in Fig. 17, specifically, the boxes 40, 28 are formed with four boxes 40A, for example, that are connected in a line. Each of the boxes 40A are provided with a filter portion 46A, and side walls 41A, 42A, 43A, 44A that are disposed along the peripheral edge of the filter portion 46A and enclose the heat storage media. The filter portions 46 of the boxes 40, 28 are configured by plural of the filter portions 46A.

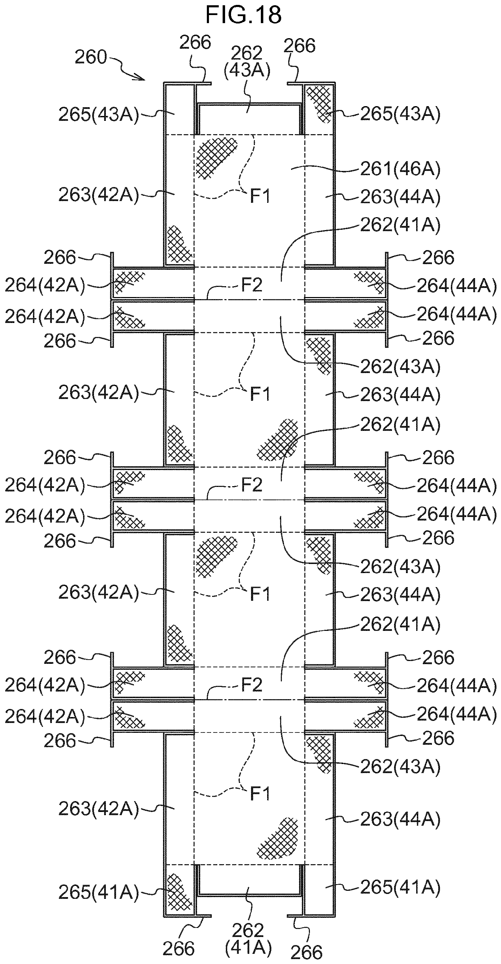

The plural connected boxes 40A are formed from one sheet material 260 illustrated in Fig. 18 for example. Specifically, the sheet material 260 is provided with four square first configuration portions 261 that become the filter portions 46A. The four first configuration portions 261 are disposed equally spaced in a line as illustrated in Fig. 18. Second configuration portions 262 and third configuration portions 263 that become the side walls 41A, 42A, 43A, 44A are provided at the four sides of each of the first configuration portions 261. Two of the second configuration portions 262 are disposed between each of the four first configuration portions 261. At each left-right direction, as illustrated, of the second configuration portions 262, fourth configuration portions 264 are provided such that the fourth configuration portions 264 are to be overlapped with the respective third configuration portions 263. Furthermore, fifth configuration portions 265 that are to be overlapped with the second configuration portions 262 are provided at the upper side, as illustrated, of the two uppermost third configuration portions 263 and at the lower side, as illustrated, of the two lowermost third configuration portions 263 in the drawing.

In the sheet material 260, plural connected boxes 40A are configured, as illustrated in Fig. 18, by plural folds F1 (dashed line portions) and F2 (dash-dotted line portions) that are provided to the sheet material 260 in advance, and by valley folding at F1 (dashed line portions) and mountain folding at F2 (dash-dotted line portions). Moreover, the box 40 is configured without performing joining at the sheet material 260.

Note that configuration portion retaining claws 266 is provided at the fourth configuration portions 264 and the fifth configuration portions 265 in the same manner as in the sheet materials 60, 160. The configuration portion retaining claws 266 is folded to the lower face side (the flow path forming member 26 side) of the filter portion 46 such that the fourth configuration portions 264 and the fifth configuration portions 265 are thereby retained against the third configuration portions 263 and the second configuration portions 262.
Note that the configuration portion retaining claws 266 may be used as the flow path forming member retaining claws 67 that retain the flow path forming member 26 against the box 40. The configuration portion retaining claws 266 are folded at the lower side flow paths 27B of the flow path forming member 26 and are pressed against the upper walls 26B from the lower side.

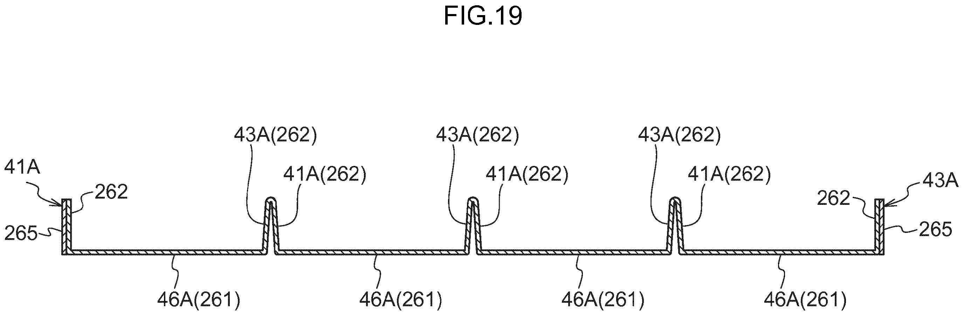

According to the boxes 40, 28 configured by the sheet material 260 of the present modified example, the filter portion 46A is configured by a single layer of the first configuration portion 261 as illustrated in Fig. 19, and the thickness (height direction dimension) of the entire filter portion 46A is thereby made uniform (constant). The load applied to the surfaces of the heat storage materials, in the event that the heat storage materials expand due to the hydration reaction, is thereby made uniform. The disintegration of the heat storage materials which may be happened due to a non-uniform load across the surfaces of the heat storage materials is accordingly suppressed.

### Other Modified Examples

Next, explanation will be given with regards to other modified examples of the present exemplary embodiment.

In the reactor 20 described above, the boxes 40, 28 do not have portions joining the sheet material 60 (the sheet materials 160, 260). However, there is no limitation thereto, and the boxes 40, 28 may be configured with joint portions. For example, in place of the configuration portion retaining claws 66A, 66B, joining of the sheet material 60, 160, 260 may be performed such that mating portions of the sheet material 60, 160, 260 are retained. In these cases, retaining of the mating portions of the sheet material 60, 160, 260 is performed by one or plural joints.

Moreover, some of the corner portions K between the neighboring side walls 41, 42, 43, 44 and some of the corner portions K between the filter portion 46 and the side walls 41, 42, 43, 44, may be formed by joining the sheet material 60. Namely, at least one out of the corner portions K between the neighboring side walls 41, 42, 43, 44 or the corner portions K between the filter portion 46 and the side walls 41, 42, 43, 44 should be formed by folding the sheet material 60.

In place of the flow path forming member retaining claw 67, the flow path forming member 26 may be retained against the boxes 40, 28 by the joint portions of the sheet material 60 (the sheet materials 160, 260). Note that as the joining method that joins each part, spot welding or brazing is used, for example.

In the reactor 20 described above, explanation has been given regarding example configurations of the boxes 40, 28 that use the sheet material 60, 160, 260. However, there is no limitation there to, and configuration may be made using differently shaped sheet materials with different folding process. Namely, the boxes 40, 28 should be formed by folding a sheet material.

In the reactor 20 described above, the holes 51 are not only formed in the filter portion 46, but also in the side walls 41, 42, 43, 44. However, configuration may be made such that the holes 51 are not formed at one part or everywhere in the side walls 41, 42, 43, 44.

In the reactor 20, the water vapor flow direction (the arrow X direction) in the reaction vessel 22, and the flow direction of the heating medium through the heating medium flow paths 24, 25 may be disposed so as to be orthogonal in the side face view. Moreover, in place of the heater 18, the heating medium flow paths through which the heating medium flows may be disposed at the liquid phase portion 16B so as to generate water vapor. Furthermore, the heater or the heating medium flow path may be disposed adjacent to the heat storage materials 30A, 30B such that the heat storage materials 30A, 30B are heated and the dehydration reaction driven.

Calcium oxide is used as the heat storage materials 30A, 30B, but any other chemical heat storage material that performs the release and storage of heat upon hydration and dehydration may be used. Furthermore, in the exemplary embodiment described above, an example is given where a compact is used as the heat storage materials 30A, 30B; however there is no restriction hereto and the reactor 20 may for example be configured with a heat storage material formed from granules loaded into the reaction vessel 22.

The present invention is not limited by the exemplary embodiments described above, and various modifications, changes, and improvements are possible within the definition of the appended claims.

## Claims

1. A box (28, 40) that is configured to be used in a chemical heat storage reactor (20), the box (28, 40) comprising:
a first wall portion (46) disposed between a water vapor flow path (27A, 27B) and an aggregate body of a powder;
a plurality of filtration holes (50) formed in the first wall portion (46) that allow passage of water vapor from the flow path (27A, 27B) to the aggregate body while restricting the powder from penetrating into the flow path (27A, 27B); and
a plurality of second wall portions (41, 42, 43, 44) disposed along a peripheral edge of the first wall portion (46) and surrounding the aggregate body,
**characterized in that** the first wall portion (46) and the second wall portions (41, 42, 43, 44) are configured by folding a sheet material (60, 160), such that at least one of either a corner portion between two of the second wall portions (41, 42, 43, 44) or a corner portion between the first wall portion (46) and one of the second wall portions (41, 42, 43, 44) is formed,
wherein a mating portion is provided by overlapping the sheet material (60, 160), and
wherein the box (28, 40) further comprises a retaining portion (66A, 66B) that is formed integrally with the second wall portions so as to project out from the second wall portions (41, 42, 43, 44), and that is folded and retains the mating portion.

2. The box (28, 40) of claim 1, wherein the first wall portion (46) and the second wall portions (41, 42, 43, 44) are configured by folding a single sheet material (60, 160), such that the corner portion between two of the second wall portions (41, 42, 43, 44) and the corner portion between the first wall portion (46) and one of the second wall portions (41, 42, 43, 44) are formed.

3. The box (28,40) of claim 1 or 2, wherein the mating portion is provided at least at the second wall portions (41, 42, 43, 44).

4. A chemical heat storage reactor (20) comprising:
a vessel (22) provided with a water vapor flow path (27A, 27B);
the box (28, 40) of any one of claims 1 to 3 provided inside the vessel (22) ; and
a heat storage material (30A, 30B) that is housed within the box (28, 40) inside the vessel (22) as the aggregate body of the powder, which generates heat by a hydration reaction with water vapor and stores heat by a dehydration reaction with heating.

5. The chemical heat storage reactor (20) of claim 4, wherein an overlapping portion (73, 75) of the mating portion of the sheet material (60, 160) presses against the vessel inner wall due to an expansion pressure generated by a hydration reaction of the heat storage material (30A, 30B).

6. The chemical heat storage reactor (20) of claim 4 or claim 5, further comprising a heat storage material retaining portion (65) that is formed integrally with the second wall portions (41, 42, 43, 44) so as to project out from the second wall portions (41, 42, 43, 44) of the box (28, 40), and that is folded and retains the heat storage material (30A, 30B).

7. The chemical heat storage reactor of any one of claims 4 to 6, further comprising:
a flow path forming member (26) that is provided inside the vessel (22) at the opposite side of the first wall portion (46) to the heat storage material (30A, 30B), and that forms the flow path (27A, 27B); and
a flow path forming member retaining portion (67) that is formed integrally with the box (28, 40) so as to project out from the box (28, 40) and that is folded and retains the flow path forming member (26).

8. A chemical heat storage system (10) comprising:
the chemical heat storage reactor (20) of any one of claims 4 to 7; and
an evaporation section (12) that is in an airtight communication state with the vessel (22) and that evaporates water for supply of the evaporated water to the vessel (22).

## Patentansprüche

1. Kasten (28, 40), der zur Verwendung in einem chemischen Wärmespeicherreaktor (20) ausgebildet ist, wobei der Kasten (28, 40) umfasst:
einen ersten Wandabschnitt (46), der zwischen einem Wasserdampfströmungsweg (27A, 27B) und einem Aggregatkörper eines Pulvers angeordnet ist;
eine Mehrzahl von Filtrationslöchern (50), die in dem ersten Wandabschnitt (46) ausgebildet sind, so dass ein Durchgang von Wasserdampf von dem Strömungsweg (27A, 27B) zu dem Aggregatkörper ermöglicht wird, während verhindert wird, dass das Pulver in den Strömungsweg (27A, 27B) eindringt; und
eine Mehrzahl von zweiten Wandabschnitten (41, 42, 43, 44), die entlang einer Umfangskante des ersten Wandabschnitts (46) angeordnet sind und den Aggregatkörper umgeben,
**dadurch gekennzeichnet, dass**
der erste Wandabschnitt (46) und die zweiten Wandabschnitte (41, 42, 43, 44) durch Falten eines Lagenmaterials (60, 160) ausgebildet worden sind, so dass mindestens einer von entweder einem Eckenabschnitt zwischen zwei der zweiten Wandabschnitte (41, 42, 43, 44) oder einem Eckenabschnitt zwischen dem ersten Wandabschnitt (46) und einem der zweiten Wandabschnitte (41, 42, 43, 44) ausgebildet ist,
wobei ein zusammenpassender Abschnitt durch Überlappen des Lagenmaterials (60, 160) bereitgestellt worden ist, und
wobei der Kasten (28, 40) ferner einen Halteabschnitt (66A, 66B) umfasst, der integriert mit den zweiten Wandabschnitten ausgebildet ist, so dass er von den zweiten Wandabschnitten (41, 42, 43, 44) vorragt, und der gefaltet ist und den zusammenpassenden Abschnitt hält.

2. Kasten (28, 40) nach Anspruch 1, bei dem der erste Wandabschnitt (46) und die zweiten Wandabschnitte (41, 42, 43, 44) durch Falten eines einzelnen Lagenmaterials (60, 160) ausgebildet worden sind, so dass der Eckenabschnitt zwischen zwei der zweiten Wandabschnitte (41, 42, 43, 44) und der Eckenabschnitt zwischen dem ersten Wandabschnitt (46) und einem der zweiten Wandabschnitte (41, 42, 43, 44) ausgebildet sind.

3. Kasten (28,40) nach Anspruch 1 oder 2, bei dem der zusammenpassende Abschnitt mindestens an den zweiten Wandabschnitten (41, 42, 43, 44) bereitgestellt ist.

4. Chemischer Wärmespeicherreaktor (20), umfassend:
einen Behälter (22), der mit einem Wasserdampf-Strömungsweg (27A, 27B) versehen ist;
den Kasten (28, 40) nach einem der Ansprüche 1 bis 3, der innerhalb des Behälters (22) bereitgestellt ist; und
ein Wärmespeichermaterial (30A, 30B), das innerhalb des Kastens (28, 40) innerhalb des Behälters (22) als Aggregatkörper des Pulvers aufgenommen ist und das Wärme durch eine Hydratisierungsreaktion mit Wasserdampf erzeugt und Wärme durch eine Dehydratisierungsreaktion durch Erwärmen speichert.

5. Chemischer Wärmespeicherreaktor (20) nach Anspruch 4, bei dem ein überlappender Abschnitt (73, 75) des zusammenpassenden Abschnitts des Lagenmaterials (60, 160) aufgrund eines Ausdehnungsdrucks, der durch eine Hydratisierungsreaktion des Wärmespeichermaterials (30A, 30B) erzeugt wird, gegen die Behälterinnenwand drückt.

6. Chemischer Wärmespeicherreaktor (20) nach Anspruch 4 oder Anspruch 5, der ferner einen Wärmespeichermaterial-Halteabschnitt (65) umfasst, der so integriert mit den zweiten Wandabschnitten (41, 42, 43, 44) ausgebildet ist, dass er von den zweiten Wandabschnitten (41, 42, 43, 44) des Kastens (28, 40) vorragt, und der gefaltet ist und das Wärmespeichermaterial (30A, 30B) hält.

7. Chemischer Wärmespeicherreaktor nach einem der Ansprüche 4 bis 6, ferner umfassend:
ein Strömungswegbildungselement (26), das innerhalb des Behälters (22) an der gegenüberliegenden Seite des ersten Wandabschnitts (46) bezogen auf das Wärmespeichermaterial (30A, 30B) bereitgestellt ist und das den Strömungsweg (27A, 27B) bildet; und
einen Strömungswegbildungselement-Halteabschnitt (67), der so integriert mit dem Kasten (28, 40) ausgebildet ist, dass er von dem Kasten (28, 40) vorragt und gefaltet ist und das Strömungswegbildungselement (26) hält.

8. Chemisches Wärmespeichersystem (10), umfassend:
den chemischen Wärmespeicherreaktor (20) nach einem der Ansprüche 4 bis 7; und
einen Verdampfungsabschnitt (12), der in einem luftdichten Verbindungszustand mit dem Behälter (22) steht und der Wasser zum Zuführen des verdampften Wassers zu dem Behälter (22) verdampft.

## Revendications

1. Boîte (28, 40) qui est configurée pour être utilisée dans un réacteur de stockage de chaleur chimique (20), la boîte (28, 40) comprenant :
une première partie de paroi (46) disposée entre un trajet d'écoulement de vapeur d'eau (27A, 27B) et un corps agrégé d'une poudre ;
une pluralité de trous de filtration (50) formés dans la première partie de paroi (46) qui permettent le passage du trajet d'écoulement de vapeur d'eau (27A, 27B) au corps agrégé tout en empêchant la poudre de pénétrer dans le trajet d'écoulement (27A, 27B) ; et
une pluralité de deuxièmes parties de paroi (41, 42, 43, 44) disposées le long d'un bord périphérique de la première partie de paroi (46) et entourant le corps agrégé, **caractérisée en ce que**
la première partie de paroi (46) et les deuxièmes parties de paroi (41, 42, 43, 44) sont configurées en pliant en matériau en feuille (60, 160), de telle sorte qu'au moins une partie d'angle parmi une partie d'angle entre deux des deuxièmes parties de paroi (41, 42, 43, 44) et une partie d'angle entre la première partie de paroi (46) et une des deuxièmes parties de paroi (41, 42, 43, 44) est formée,
où une partie d'accouplement est prévue en chevauchant le matériau en feuille (60, 160), et
où la boîte (28, 40) comprend en outre une partie de retenue (66A, 66B) qui est formée intégralement avec les deuxièmes parties de paroi afin de dépasser des deuxièmes parties de paroi (41, 42, 43, 44) et qui est pliée et maintient la partie d'accouplement.

2. Boîte (28, 40) selon la revendication 1, dans laquelle la première partie de paroi (46) et les deuxièmes parties de paroi (41, 42, 43, 44) sont configurées en pliant un seul matériau en feuille (60, 160), de sorte que la partie d'angle entre deux des deuxièmes parties de paroi (41, 42, 43, 44) et la partie d'angle entre la première partie de paroi (46) et une des deuxièmes parties de paroi (41, 42, 43, 44) est formée.

3. Boîte (28, 40) selon la revendication 1 ou 2, où la partie d'accouplement est prévue au moins au niveau des deuxièmes parties de paroi (41, 42, 43, 44).

4. Réacteur de stockage de chaleur chimique (20) comprenant :
une cuve (22) munie d'un trajet d'écoulement de vapeur d'eau (27A, 27B) ;
la boîte (28, 40) de l'une quelconque des revendications 1 à 3 prévue à l'intérieur de la cuve (22) ; et
un matériau de stockage de chaleur (30A, 30B) qui est logé dans la boîte (28, 40) à l'intérieur de la cuve (22) comme corps agrégé de la poudre, qui produit de la chaleur par une réaction d'hydratation avec la vapeur d'eau et stocke la chaleur par une réaction de déshydratation avec chauffage.

5. Réacteur de stockage de chaleur chimique (20) selon la revendication 4, où une partie chevauchante (73, 75) de la partie d'accouplement du matériau en feuille (60, 160) presse contre la paroi interne de la cuve en raison d'une pression de dilatation générée par une réaction d'hydratation du matériau de stockage de chaleur (30A, 30B).

6. Réacteur de stockage de chaleur chimique (20) selon la revendication 4 ou la revendication 5, comprenant en outre une partie de retenue de matériau de stockage de chaleur (65) qui est formée intégralement avec les deuxièmes parties de paroi (41, 42, 43, 44) de manière à dépasser des deuxièmes parties de paroi (41, 42, 43, 44) de la boîte (28, 40) et qui est pliée et maintient le matériau de stockage de chaleur (30A, 30B).

7. Réacteur de stockage de chaleur chimique de l'une quelconque des revendications 4 à 6, comprenant en outre :
un élément formant un trajet d'écoulement (26) qui est prévu à l'intérieur de la cuve (22) du côté opposé de la première partie de paroi (46) au matériau de stockage de chaleur (30A, 30B), et qui forme le trajet d'écoulement (27A, 27B) ; et
une partie de retenue (67) de l'élément formant un trajet d'écoulement qui est formée intégralement avec la boîte (28, 40) afin de dépasser de la boîte (28, 40) et qui est pliée et maintient l'élément formant un trajet d'écoulement (26).

8. Réacteur de stockage de chaleur chimique (10) comprenant :
le réacteur de stockage de chaleur chimique (20) selon l'une des revendications 4 à 7 ; et
une section d'évaporation (12) qui est dans un état de communication hermétique avec la cuve (22) et qui évapore de l'eau pour alimenter la cuve (22) en eau évaporée.
